# EUROPEAN PATENT APPLICATION

(11) **EP 2 818 371 A1**
(43) Date of publication of application: **31.12.2014**
(21) Application number: 14173902.9
(22) Date of filing: 25.06.2014
(51) Int. Cl.: B60T 7/04, B60T 8/17, B60T 13/66, B60T 17/18, B60T 17/22

(54) **Pedal control system for a vehicle**

(30) Priority: 26.06.2013 GB 201311348
(71) Applicant: Nissan Motor Manufacturing (UK) Ltd., Cranfield Bedfordshire MK43 0DB (GB)
(72) Inventor: Mateu, Joan, Barcelona 08040 (ES)

(57) **Abstract**

An adaptive pedal feeling system for a vehicle for adapting the resistance of the pedal of a vehicle in dependence upon driving conditions, where the vehicle receives at least one vehicle operating parameter and determines a vehicle operating condition from the operating parameter, the vehicle operating condition being related to a vehicle adherence condition; the system then outputting a control signal, the control signal being arranged to adapt the behaviour of the pedal in response to the determined vehicle operating condition.

## Description

### Field of the invention

The present invention relates to an adaptive pedal feeling system for a vehicle. In particular, the present invention relates to a control method and associated control systems for adapting the resistance of the pedal of a vehicle in dependence upon driving conditions.

### Background to the Invention

Over the past decades and as the number of vehicles per capita is constantly increasing, the enhancement of automobile safety has become imperative. To this end, various systems of passive and active safety have been developed. The term passive safety refers to systems that help protect passengers during a crash, whilst the term active safety refers to technology assisting in the prevention of a crash.

In the field of active safety, some of the most important developments have been in the field of braking technologies and include technologies such as the Anti-lock Braking System (ABS), Electronic Stability Control (ESC) and Traction Control Systems (TCS). ABS allows the wheels of a motor vehicle to maintain tractive contact with the road surface according to driver inputs during braking to prevent them from locking up and to avoid uncontrollable skidding. ECS and TCS are secondary functions of ABS, whose main role is to automatically apply braking to each wheel separately.

The above-mentioned systems are, however, reactive; they must first detect a problem before corrective action can be taken. They are only applicable when the driver has already entered an unsafe, uncontrollable situation and they are limited by a lack of information relating to the vehicle's operating conditions.

It is therefore an object of this invention to provide a model and system that substantially overcomes or mitigates the above problems and to enhance vehicle safety in a pro-active manner.

### Summary of the Invention

According to a first aspect of the present invention, there is provided a method of adapting the behaviour of a pedal within the pedal system of a vehicle, the method comprising: receiving at least one vehicle operating parameter; determining a vehicle operating condition from the received at least one operating parameter, the vehicle operating condition being related to a vehicle adherence condition; outputting a control signal, the control signal being arranged to adapt the behaviour of the pedal in response to the determined vehicle operating condition.

The present invention provides a method that seeks to avoid the driver of a vehicle reaching the limits of adherence by providing feedback to the driver through the behavioural response of the pedal system of the vehicle.

According to the method of the present invention at least one vehicle operating parameter (or data relating to such an operating parameter) is received, e.g. the vehicle operating parameter may be measured via an on board sensor and sent to a processing module on the vehicle such as an electronic control unit (ECU). This at least one operating parameter is then processed to determine a vehicle operating condition that is related to a vehicle adherence condition. A control signal to adapt the behaviour of the pedal system may then be output.

By altering the behavioural response of the pedal system the vehicle's driver is notified when the driving conditions are indicating that the situation is getting close to being uncontrollable. Adapting the behavioural response also allows the driver to operate the vehicle with more precision under such circumstances.

Specifically, knowledge of the slip ratio experienced by the vehicle's wheels is important information that is not provided by current safety systems.

The slip ratio is a means of calculating and expressing the locking status of a wheel. When a vehicle is driven along a straight line, all its wheels rotate at virtually identical speeds, while the vehicle's speed is also identical to the wheel speed. When braking is applied in order to decelerate the vehicle, the speed of the wheels becomes slightly lower than that of the body of the vehicle, which is travelling along under its own inertia. There is a maximum slip ratio over which the wheel may lose traction (skidding), entering an uncontrollable, unsafe situation. If vehicle control systems had accurate knowledge of the slip ratio they could predict, rather than react to uncontrollable situations, further enhancing vehicle safety by allowing the driver a larger margin for corrective moves.

Although slip ratio is one vehicle operating condition that may be used by the present invention, there are other means for determining the vehicle's adherence, e.g. via the driving force on a tyre.

Conveniently, the vehicle operating parameter may comprise one or more selected from: wheel speed; pedal effort; pedal position; driving force on a rolling wheel.

The step of determining a vehicle operating condition may comprise calculating a slip ratio from the received vehicle operating parameter. Furthermore, the step of determining a vehicle operating condition may further comprise comparing the calculated slip ratio to a threshold value.

The step of determining a vehicle operating condition may also or alternatively comprise calculating normalised driving force on a rolling tyre from the received vehicle operating parameter. Furthermore, the step of determining a vehicle operating condition may further comprise comparing the calculated normalised driving force to a threshold value.

Conveniently, the threshold value that comparison is made with may be variable depending on the desired pedal resistance/ driving behaviour. In the event a threshold value has been exceeded, the method may further comprise generating a control signal arranged to adapt the behaviour of the pedal.

The step of determining a vehicle operating condition may comprise analysing the calculated slip ratio and the method may further comprise generating a control signal arranged to adapt the behaviour of the pedal that varies as the calculated slip ratio/normalised driving force varies.

The step of determining a vehicle operating condition may comprise allocating the calculated slip ratio/normalised driving force to a predefined region of vehicle operation, the allocated region being used as the vehicle operating condition. Each predefined region may be associated with a predetermined change in behaviour of the pedal, and the method may further comprise generating the control signal to adapt the behaviour of the pedal in response to the predetermined region that is allocated. The control signal may be output to one of the following: an electric motor within a pedal arrangement of the vehicle; a hydraulic module and actuator within the steering arrangement of the vehicle (or output to an actuator that controls a hydraulic motor); a servo with an electrovalve within a pedal arrangement of the vehicle.

The control signal may be arranged to increase the force applied on the pedal required to displace the pedal from a neutral position.

According to a second aspect of the present invention, there is provided a control module arranged to adapt the behaviour of a pedal within the pedal system of a vehicle, the module arranged to: receive at least one vehicle operating parameter; determine a vehicle operating condition from the measured at least one operating parameter, the vehicle operating condition being related to vehicle adherence conditions; output a control signal, the control signal being arranged to adapt the behaviour of a pedal in response to the determined vehicle operating parameter.

The present invention extends to an electronic control unit of a vehicle comprising a control module according to the second aspect of the invention and to a vehicle comprising such a control module.

It will be appreciated that any of the preferred and/or optional features of the first aspect of the invention can be incorporated alone or in appropriate combination in the second aspect of the invention also.

### Brief Description of the Drawings

In order for the invention to be better understood, reference will be made, by way of example, to the accompanying drawings in which:
Figure 1 is a representation of a pedal effort versus pedal stroke profile in a known vehicle system;
Figure 2 is a schematic diagram of a vehicle;
Figure 3 is a flow chart of a pedal behaviour control method in accordance with an embodiment of the present invention;
Figure 4 is a representation of the normalised driving force versus slip ratio for an accelerating tyre showing three regions of work in accordance with an embodiment of the present invention;
Figure 5 is a representation of a pedal effort versus pedal stroke profile in a vehicle system in accordance with an embodiment of the present invention;
Figures 6 to 8 show three different vehicle arrangements for providing the pedal behaviour control method of Figure 3.

### Detailed Description of the exemplary embodiments

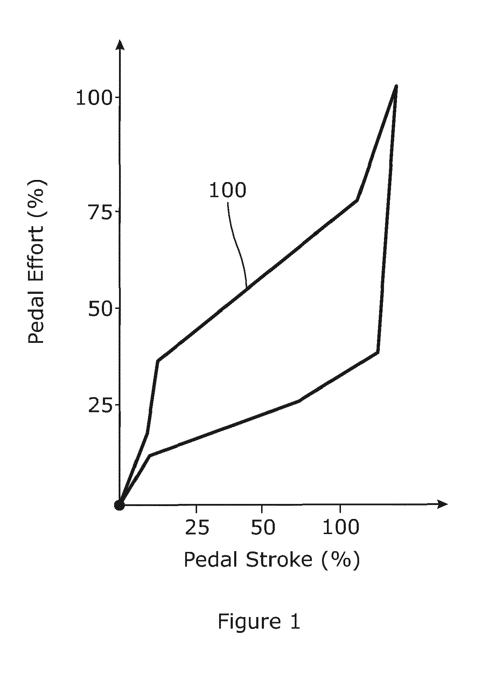

Figure 1 shows a representation (graph trace 100) within a known vehicle system of the pedal effort that a driver of a vehicle exerts on a pedal as they control the vehicle versus the pedal stroke. The term pedal effort refers to the force applied on the pedal to displace it from the neutral position. Pedal stroke refers to the displacement of the pedal from the neutral position.

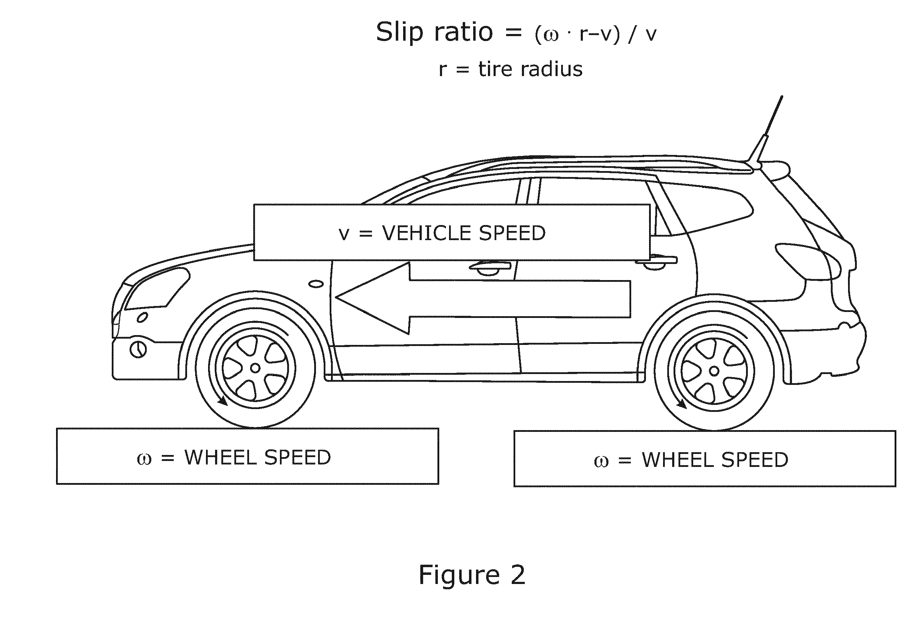

Figure 2 shows a schematic diagram of a vehicle 600. The vehicle's wheels' angular velocity ω, wheel radius r and vehicle speed v are annotated on the figure. The slip ratio, which is defined in the figure as (ωxr-v)/v, is essentially the normalised difference between the wheel speed and the theoretical speed of the vehicle. When a vehicle is driven along a straight line, all its wheels rotate at virtually identical speeds, while the vehicle's speed is also identical to the wheel speed. When braking is applied in order to decelerate the vehicle, the speed of the wheels becomes slightly lower than that of the body of the vehicle, which is travelling along under its own inertia. That difference in speed is called the slip ratio and it is expressed as a percentage.

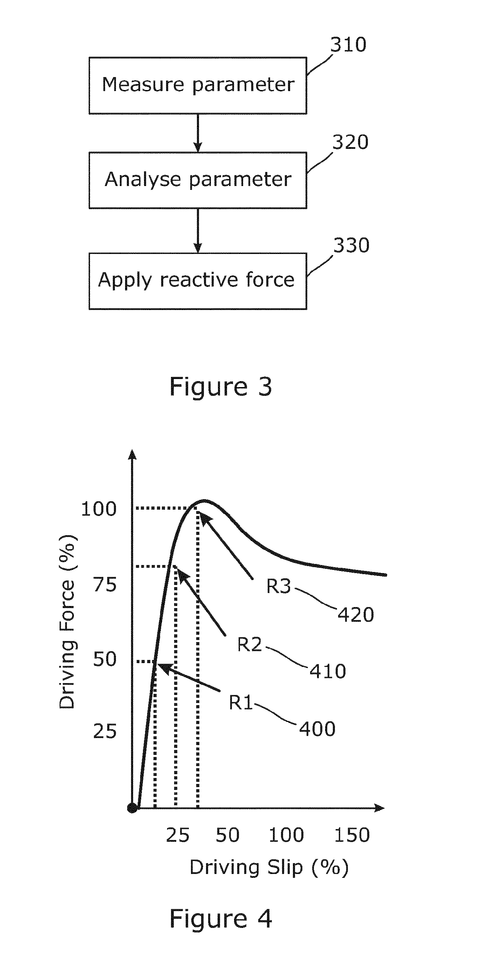

Figure 3 is a flow chart detailing a method of controlling the behaviour of an accelerator and/or a brake pedal in response to vehicle driving conditions in accordance with an embodiment of the present invention.

In Step 310 at least one operational parameter of the vehicle is measured and then input into a control module within a vehicle system. As detailed below, one or more of the following parameters may be measured: accelerator and/or brake pedal position, accelerator and/ or braking pedal effort, wheel speed.

In Step 320 the at least one operational parameter is used to determine a vehicle operating condition that is related to vehicle adherence conditions. As detailed below, the slip ratio of the steering tyres of the vehicle may be determined from the operational parameter measured in Step 310.

In Step 330 the behavioural response of the pedal may be altered in response to the determined vehicle operating condition. For example, the behaviour of the pedal may be changed by increasing the pedal's stiffness or resistance to displacement.

The method detailed in the flow chart of Figure 3 provides a method of adapting the required pedal effort /behaviour of a vehicle's pedals in response to vehicle operating conditions. The system may therefore effectively detect when the vehicle is approaching a limit of tyre adherence and alter the pedal effort to further driver input. Such adaptive behaviour of the pedal effort may allow the driver to operate the pedals with more precision as the vehicle approaches an uncontrolled situation where the wheels lose traction and start spinning.

Figure 4 shows a plot of normalised driving/braking force on the rolling tyre versus slip ratio.

The driving force is the longitudinal force that tyres generate during acceleration (similarly, braking force is the longitudinal force tyres generate during braking) and it is normalised with respect to the tyre's maximum driving force capacity. This is because different tyres have different driving force capacities, and what is important in terms of behaviour is what percentage of that capacity has been reached, rather than the absolute value of the driving force generated.

The slip ratio, previously mentioned with reference to Figure 2, can be used as a means of calculating and expressing the locking status of a wheel and it is vital to the effectiveness of any anti-locking braking system. The ideal slip ratio for maximum deceleration is between 10-30%. There is a maximum slip ratio from which on the wheel starts to spin, reducing the amount of braking/ driving force applied to it. When this maximum slip ratio is surpassed, the vehicle enters an unsafe, uncontrolled situation.

Turning back to Figure 4, three regions (regions R1, R2 and R3) corresponding to different vehicle operating conditions have been defined. It is to be appreciated that more or fewer regions may be defined based on a particular vehicle type or a given vehicle operating environment.

In the embodiment shown in Figure 4, region 1, 400, (R1) applies from the origin of the graph (i.e. vehicle and wheel both moving at identical speeds) up to 10-15% slip ratio or 50% of the normalised driving force.

Region 2, 410, (R2) applies from 10-15% slip ratio (50% of the normalised driving force) up to 25-30% slip ratio which corresponds to 80% of the normalised driving force.

Region 3, 420, (R3) applies from 25-30% slip ratio up to 35-40% slip ratio (which corresponds to 95% of the normalised driving force).

It is noted that the boundaries of the regions defined above and the correspondence between the slip ratio and driving force may change with vehicle type/tyre type and the vehicle operating environment. Additionally, the different regions could be tuned up or down to provide, for example, an increase in the sensitivity/dynamic "feel" of the vehicle handling, enabling it to be driven closer to the edge, or conversely, to provide lower pedal resistance. As such the skilled reader will appreciate that the regions discussed herein are by way of example only.

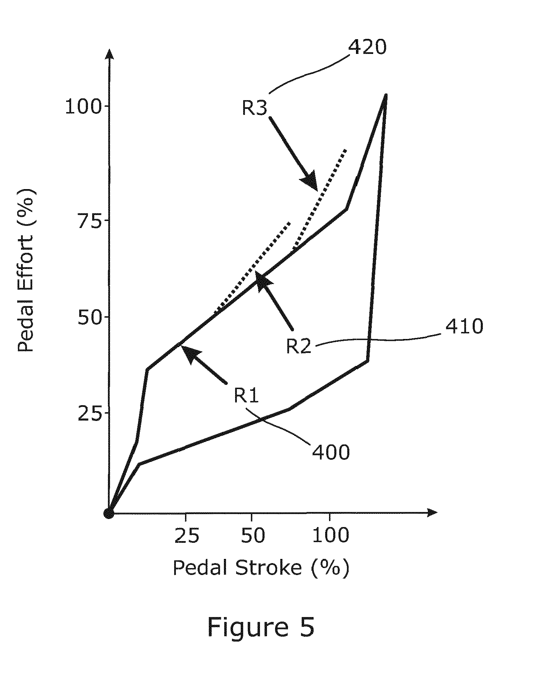

The present invention is operable to alter the behavioural response characteristic of the pedals in response to differing vehicle operating conditions. In the embodiment of Figure 5 the pedal behaviour may be controlled as follows:
- Within region 1, 400, (R1) the pedal behaviour is set to a standard response condition (in other words the pedal responds as per the profile of Figure 1);
- Within region 2, 410, (R2) the behavioural response of the pedal may be altered such that the effort required to produce a given pedal stroke increased by approximately 10-15%. In other words the driver of the vehicle experiences a pedal that is "stiffened" compared to the behaviour within region 1;
- Within region 3, 420, (R3) the behavioural response of the pedal is further altered such that the effort required to produce a given pedal stroke is increased (relative to the standard wheel response condition) by 20-25%. The pedal thus will feel even stiffer to the driver than in region 2.

Referring again to the method shown in Figure 3, a control system for a vehicle may in Step 310 measure an operational parameter of the vehicle. In the embodiment of Figure 3 this operational parameter may be the wheel speed, the accelerator or brake pedal position and/ or pedal effort (the force exerted on the pedal to displace it from its neutral position). In Step 320 the control system may determine the vehicle operating condition, in other words the control system may determine if the vehicle is currently within operating region 1, 2 or 3. In Step 330 the behavioural response of the pedal may be altered to result in a "stiffer" pedal response as the vehicle operating condition moves from region 1, 400, to region 2, 410 and then onto region 3, 420 .

Figure 5 is a representation of a pedal effort versus pedal stroke profile in a vehicle system operating in accordance with an embodiment of the invention. Figure 4 is similar to that shown in Figure 1, however in Figure 5 the modification of the pedal behaviour within regions R2, 410, and R3, 420 is shown via the dotted lines. It can be seen that as the vehicle enters region 2, 410, the gradient of the effort versus stroke line increases, which indicates that greater effort needs to be applied to the pedal (compared to region 1, 400) to provoke a given pedal displacement. Similarly, the gradient in region 3, 420, is greater than region 2, 410.

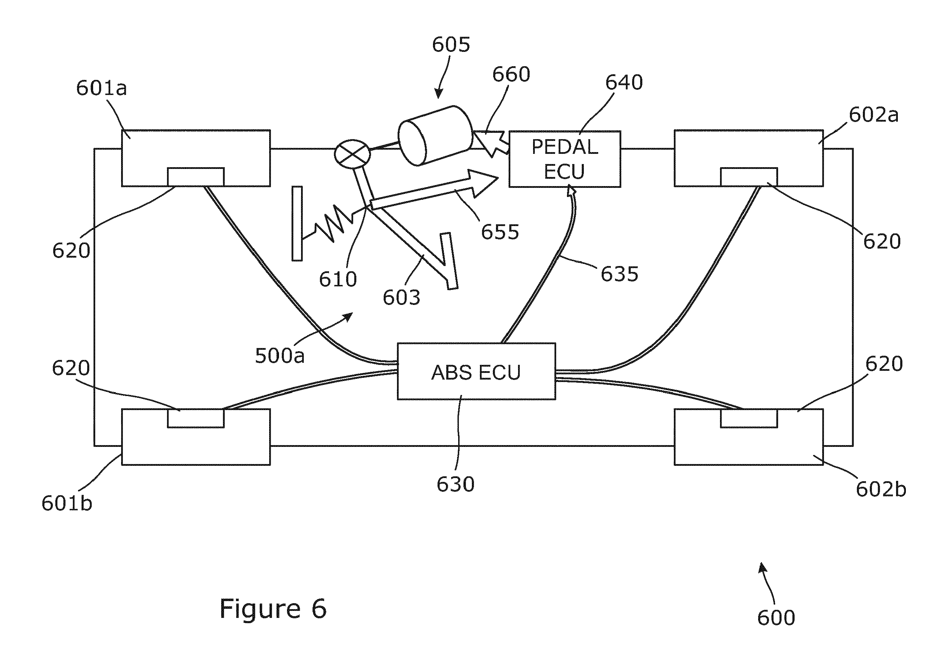

Figures 6 to 8 show different vehicle pedal control systems in accordance with embodiments of the present invention. Turning to Figure 6 a schematic representation of the pedal control system 500a of a vehicle 600 is shown. The vehicle comprises four tyres, 601 a, 601 b, 602a, 602b and a brake and/or accelerator pedal 603 connected to an electric motor arrangement 605. The pedal 603 is also connected with a pedal sensor 610 recording pedal position and effort.

The vehicle also comprises an electronic control unit (ECU) 630 for an anti-lock braking system (ABS) which is in communication with the braking system within each wheel. The braking system comprises a brake and wheel speed sensor 620 mounted within each wheel of the vehicle.

The vehicle of Figure 6 further comprises a pedal electronic control unit (pedal ECU) 640. The pedal ECU 640 receives input 635 from the ABS ECU 630 and also an input 655 from the pedal sensor 610, so that driver input via the pedal 603 can be measured.

The pedal ECU 640 comprises an output 660 to the electric motor arrangement 605. In this manner the response of the pedal 603 can be altered.

In more detail, and in accordance with the method shown in Figure 3, the pedal system of Figure 6 operates as follows:
- In Step 310 the pedal ECU 640 receives at least one operational parameter (e.g. wheel speed, pedal position/pedal effort, driving force) from the brake and wheel speed sensor 620 and/or the pedal sensor 610;
- In Step 320 the pedal ECU 640 determines a vehicle operating condition. This determining step may comprise determining the vehicle slip ratio from the at least one operational parameter received in Step 310 and from the determined slip ratio determining the vehicle operating condition, e.g. which of regions 1, 2 or 3 the vehicle is currently operating in;
- In Step 330 the pedal ECU 640 outputs a control signal 660 to an electric motor within the pedal arrangement to increase or decrease the pedal's resistance in order to change the behavioural response of the pedal 603.

Methods to measure a vehicle's slip ratio typically measure the vehicle speed and the wheels' angular velocity. The slip ratio may then be computed according to the ISO8855 standards. As mentioned with reference to Figure 2, the slip ratio may be defined as slip ratio = (ωxr-v)/v, where ω is the angular velocity of the wheel, r is the radius of the wheel, and v is the sped of the vehicle.

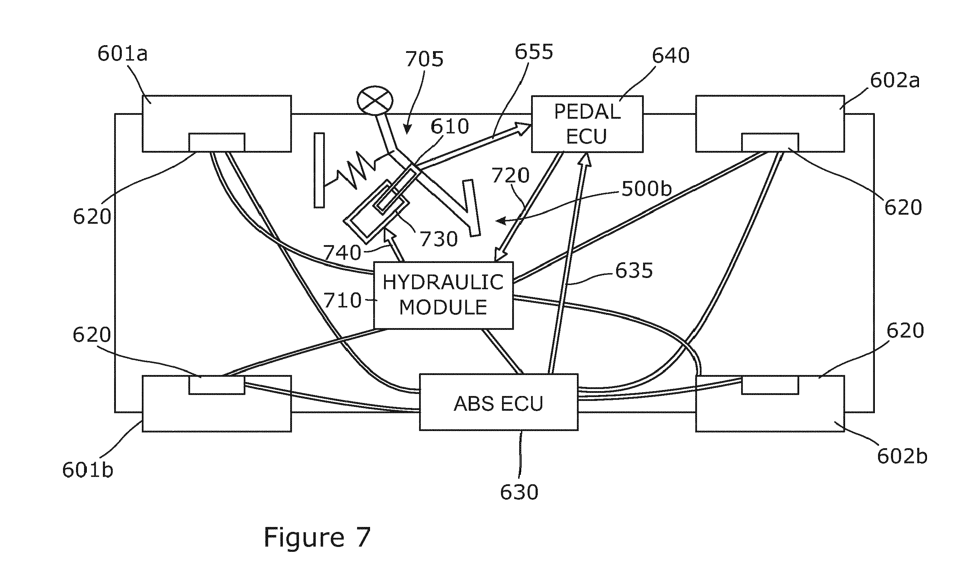

Turning to Figure 7 a further schematic representation of the pedal control system 500b of a vehicle 600 is shown. The vehicle comprises four tyres 601 a, 601 b, 602a, 602b and a brake and/or accelerator pedal 603 connected to a hydraulic circuit 705 for brakes. The hydraulic circuit 705 for brakes comprises a hydraulic actuator 730 connected to the pedal 603 and a hydraulic module 710. The pedal 603 is also connected with a pedal sensor 610 recording pedal position and effort.

The vehicle also comprises an electronic control unit (ECU) 630 for an anti-lock braking system (ABS) which is in communication with the braking system within each wheel and a hydraulic module. The braking system comprises a brake and wheel speed sensor 620 mounted within each wheel of the vehicle. The hydraulic module 710 is connected to the brake and wheel speed sensors 620 and the hydraulic actuator 730.

The vehicle of Figure 7 further comprises a pedal electronic control unit (pedal ECU) 640. The pedal ECU 640 receives input 635 from the ABS ECU 630 and also an input 655 from the pedal sensor 610, so that driver input via the pedal 603 can be measured.

The pedal ECU 640 comprises an output 720 to the hydraulic module 710.

The hydraulic module 710 comprises an output 740 to the hydraulic actuator 730 of the hydraulic circuit 705.

In more detail, and in accordance with the method shown in Figure 3, the pedal system of Figure 7, operates as follows:
- In Step 310 the pedal ECU 640 receives at least one operational parameter (wheel speed, pedal position and effort, driving force) from the brake and wheel speed sensor 620 and/or the pedal sensor 610;
- In Step 320 the pedal ECU 640 determines a vehicle operating condition. This determining step may comprise determining the vehicle slip ratio from the at least one operational parameter received in Step 310 and from the determined slip ratio determining the vehicle operating condition, e.g. which of regions 1, 2 or 3 the vehicle is currently operating in;
- In Step 330 the pedal ECU 640 outputs a control signal 720 to the hydraulic module 710 which in turn applies the appropriate increase/ decrease in pressure to the hydraulic actuator 730 (via output 740) in order to change the behavioural response of the pedal 603.

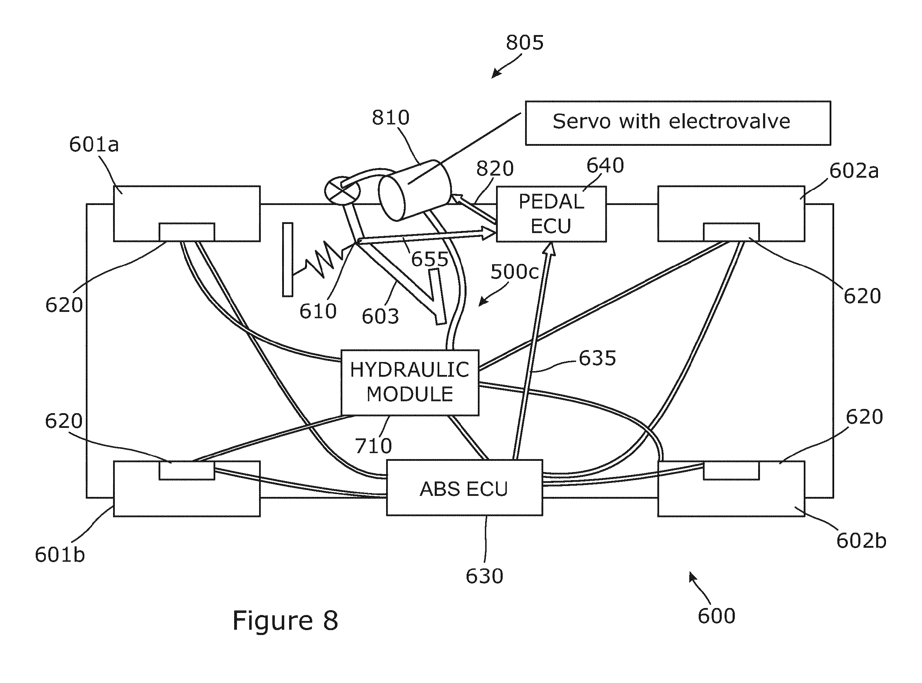

Turning to Figure 8 a further schematic representation of the pedal control system 500c of a vehicle 600 is shown. The vehicle comprises four tyres 601 a, 601 b, 602a, 602b and a brake and/or accelerator pedal 603 connected to a hydraulic system for brakes 805. The hydraulic system for brakes 805 comprises a servo with an electrovalve 810 and is in turn connected to the pedal 603 and a hydraulic module 710. The pedal 603 is also connected with a pedal sensor 610 recording pedal position and effort.

The vehicle also comprises an electronic control unit (ECU) 630 for an anti-lock braking system (ABS) which is in communication with the braking system within each wheel and the hydraulic module 710. The braking system comprises a brake and wheel speed sensor mounted 620 within each wheel of the vehicle. The hydraulic module 710 is connected to the brake and wheel speed sensors 620 and the servo with an electrovalve 810.

The vehicle of Figure 8 further comprises a pedal electronic control unit (pedal ECU) 640. The pedal ECU 640 receives input 635 from the ABS ECU 630 and also an input 655 from the pedal sensor 610, so that driver input via the pedal 603 can be measured.

The pedal ECU 640 comprises an output 820 to the servo with an electrovalve 810.

In more detail, and in accordance with the method shown in Figure 3, the pedal system of Figure 8, operates as follows:
- In Step 310 the pedal ECU 640 receives at least one operational parameter (wheel speed, pedal position/pedal effort, driving force) from the brake and wheel speed sensor 620 (via ABS ECU 630) and/or the pedal sensor 610;
- In Step 320 the pedal ECU 640 determines a vehicle operating condition. This determining step may comprise determining the vehicle slip ratio from the at least one operational parameter received in Step 310 and from the determined slip ratio determining the vehicle operating condition, e.g. which of regions 1, 2 or 3 the vehicle is currently operating in;
- In Step 330 the steering ECU 640 outputs a control signal 820 to the servo with an electrovalve 810 which in turn applies the appropriate increase/ decrease in pressure to the hydraulic circuit of the hydraulic brake system 805 in order to change the behavioural response of the pedal 603.

In the description above the vehicle operating condition is determined by converting a measured or input vehicle operating parameter (e.g. wheel speed) into a slip ratio that is then placed within a region of operation (region 1, 2 or 3). The behaviour of the pedal is then altered depending on the range that the vehicle is operating within. Within this context the vehicle operating condition is the "region" that is calculated.

It should be noted however that other vehicle operating conditions may be used to alter the pedal behaviour if such conditions may be linked to the vehicle adherence. For example, the steering ECU 640 may calculate the slip ratio of the vehicle and directly use the slip ratio as the vehicle operating condition. Alternatively, the ECU may use a further vehicle operating condition such as slip force.

Furthermore, instead of the discrete region method described above, the behaviour of the steering wheel may be changed in a continuous manner as the vehicle operating condition changes. As a further alternative the behaviour of the steering wheel may be changed as soon as the vehicle operating condition passes a predefined threshold level.

## Claims

1. A method of adapting the behaviour of a pedal (603) within the pedal system (500a) of a vehicle (600), the method comprising:
receiving (310) at least one vehicle operating parameter;
determining (320) a vehicle operating condition from the received at least one operating parameter, the vehicle operating condition being related to a vehicle adherence condition;
outputting a control signal (660), the control signal being arranged to adapt the behaviour of the pedal in response to the determined vehicle operating condition.

2. The method of Claim 1, wherein the vehicle operating parameter comprises one or more selected from: wheel speed; pedal effort; pedal position; driving force on a rolling wheel.

3. The method of Claim 1 or Claim 2, wherein the step of determining a vehicle operating condition (320) comprises calculating a slip ratio from the received vehicle operating parameter.

4. The method of Claim 3, wherein the step of determining a vehicle operating condition (320) comprises comparing the calculated slip ratio to a threshold value.

5. The method of any one of Claims 1 to 3, wherein the step of determining a vehicle operating condition (320) comprises calculating normalised driving force on a rolling tyre from the received vehicle operating parameter.

6. The method of Claim 5, wherein the step of determining a vehicle operating condition (320) comprises comparing the calculated normalised driving force to a threshold value.

7. The method of Claim 4 or Claim 6, wherein the threshold value is variable depending on the desired pedal resistance/ driving behaviour.

8. The method of any one of Claims 4, 6 or 7, wherein in the event a threshold value has been exceeded, the method further comprises generating a control signal (660) arranged to adapt the behaviour of the pedal.

9. The method of any preceding claim, wherein the step of determining a vehicle operating condition (320) comprises analysing the calculated slip ratio and the method further comprises generating a control signal (660) arranged to adapt the behaviour of the pedal that varies as the calculated slip ratio/normalised driving force varies.

10. The method of any preceding claim, wherein the step of determining a vehicle operating condition (320) comprises allocating the calculated slip ratio/normalised driving force to a predefined region (400, 410, 420) of vehicle operation, the allocated region being used as the vehicle operating condition.

11. The method of Claim 10, wherein each predefined region (400, 410, 420) is associated with a predetermined change in behaviour of the pedal, the method further comprising generating the control signal (660) to adapt the behaviour of the pedal in response to the predetermined region that is allocated.

12. The method of Claim 11, wherein the control signal (660) is output to one of the following: an electric motor (605) within a pedal arrangement of the vehicle; a hydraulic module (710) and actuator within a pedal arrangement of the vehicle 603; a servo with an electrovalve (810) within a pedal arrangement of the vehicle.

13. The method of any preceding claim, wherein the control signal is arranged to increase the force applied on the pedal (603) required to displace the pedal from a neutral position.

14. A control module arranged to adapt the behaviour of a pedal (603) within the pedal system of a vehicle, the module arranged to:
receive (310) at least one vehicle operating parameter;
determine (320) a vehicle operating condition from the measured at least one operating parameter, the vehicle operating condition being related to vehicle adherence conditions;
output a control signal (660), the control signal being arranged to adapt the behaviour of a pedal in response to the determined vehicle operating parameter.

15. An electronic control unit (640) of a vehicle comprising a control module as claimed in 14.

16. A vehicle comprising a control module as claimed in Claim 14.
